# FASCICULE DE BREVET EUROPEEN

(11) **EP 2 310 447 B1**
(45) Date de publication et mention de la délivrance du brevet: **01.01.2020**
(21) Numéro de dépôt: 09737081.1
(22) Date de dépôt: 17.07.2009
(51) Int. Cl.: C08J 3/18, C08L 3/02

(54) **PROCEDE DE PREPARATION DE COMPOSITIONS A BASE DE COMPOSANT AMYLACE ET DE POLYMERE SYNTHETIQUE**
VERFAHREN ZUR HERSTELLUNG VON ZUSAMMENSETZUNGEN AUF STÄRKE- UND SYNTHETISCHE POLYMERE-BASIS
PROCESS FOR PREPARING COMPOSITIONS BASED ON A STARCHY COMPONENT AND ON A SYNTHETIC POLYMER

(30) Priorité: 24.07.2008 FR 0855097
(43) Date de publication de la demande: 20.04.2011
(73) Titulaire: Roquette Frères, 62136 Lestrem (FR)
(72) Inventeur: FERON, Thierry, F-62232 Fouquieres Les Bethune (FR); SAINT LOUP, René, 59160 Lomme (FR); GIMENEZ, Jérôme, F-69009 Villeurbanne (FR); LAGNEAUX, Didier, F-74290 Bluffy (FR); SAUTEL, Henri, F-38090 Villefontaine (FR)
(74) Mandataire: Plasseraud IP
(86) Numéro de dépôt international: PCT/FR2009/051435
(87) Numéro de publication internationale: WO 2010/010282

(56) Documents cités:
- EP-A- 1 229 075
- DE-A1- 19 533 800
- US-A- 5 462 981
- US-A1- 2001 039 303
- US-B1- 6 365 079
- WANG H ET AL: "Effects of Starch Moisture on Properties of Wheat Starch/Poly(Lactic acid) Blend Containing Methylenediphenyl Diisocyanate" JOURNAL OF POLYMERS AND THE ENVIRONMENT, KLUWER ACADEMIC/PLENUM PRESS, NEW YORK, NY, US, vol. 10, no. 4, 1 janvier 2002 (2002-01-01), pages 133-138, XP002491347 ISSN: 1566-2543

## Description

La présente invention concerne un procédé de préparation de compositions à base de polymère synthétique et de composant amylacé, ainsi que les compositions obtenues par ce procédé.

Il est connu depuis déjà quelques dizaines d'années d'incorporer de l'amidon granulaire en tant que charge dans des matières plastiques telles que le polyéthylène. Avant dispersion de l'amidon dans le polymère synthétique l'amidon natif granulaire est généralement séché jusqu'à un taux d'humidité inférieur à 1% en poids, pour réduire son caractère hydrophile, faciliter l'incorporation dans la matrice continue formée par le polymère et stabiliser la dispersion obtenue. Dans ce même but, l'amidon a également été enrobé préalablement par des corps gras (acides gras, silicones, siliconates) ou modifié, à la surface des grains, par greffage de groupes hydrophobes tels que des siloxanes, ou de groupes réactifs tels que des isocyanates. Les matériaux ainsi obtenus contenaient généralement environ 10 %, tout au plus 20% en poids d'amidon granulaire, car au-delà de cette valeur, les propriétés mécaniques des matériaux composites étaient insatisfaisantes.

Il a ensuite été envisagé de préparer des matériaux, le plus souvent biodégradables, contenant des proportions plus importantes en amidon, l'amidon étant généralement, à un moment donné du procédé de préparation du matériau, plastifié par un agent plastifiant qui peut être de l'eau. A titre d'exemples :
- le brevet US 5,462,981 décrit la préparation de mélanges polymériques biodégradables à base d'un polymère hydrosoluble, en l'occurrence d'alcool polyvinylique (dénommé « PVA »), préplastifié par extrusion dans des conditions très particulières, lesdits mélanges pouvant contenir de 20 à 70 %, en poids, d'amidon. L'amidon, granulaire, n'est pas préplastifié lorsqu'il est mis en présence du PVA, lequel se présente alors sous forme solide, à savoir de granulés extrudés (« PLASTICIZED PVA GRANULES »).
- le brevet DE 195 33 800 décrit la préparation de mélanges polymériques biodégradables pouvant contenir encore plus d'amidon. L'amidon peut avoir été préplastifié avant son introduction dans l'extrudeuse mais en pratique, selon les exemples, le plastifiant de l'amidon est mis en œuvre par mélange avec, simultanément, l'amidon et le polymère à l'état solide, en l'occurrence de l'acétate de polyvinyle («PVAc »).
- le brevet US 6,365,079 décrit des compositions pouvant contenir de 40 à 98 % , en poids, d'amidon et de 2 à 60%, en poids, d'un polymère particulier de type « thermoplastic hydroxy-functionalized polyetheramine ». Comme dans le cas précédent, l'amidon peut avoir été préplastifié avant son introduction dans l'extrudeuse mais en pratique, selon les exemples, le plastifiant de l'amidon, en l'occurrence de l'eau, est mis en œuvre par mélange avec, simultanément, l'amidon et le polymère à l'état solide.
- le brevet US 2001/0039303 décrit la préplastification, par extrusion, d'un amidon par un plastifiant très particulier, à savoir de natures simultanément polymérique, biodégradable et hydrophobe. La mise en œuvre d'un tel plastifiant permet de s'affranchir de l'utilisation d'un plastifiant d'amidon classique, de bas poids moléculaire (« low-molecular-weight plasticizer ») et dont la présence, dans le cas présent, n'est pas souhaitée en vue de ne pas diminuer les caractéristiques physiques et/ou mécaniques du matériau final. En pratique, ce dernier contient un ou plusieurs polymères autres que le polymère plastifiant de l'amidon (« additional polymers »), lesquels sont mis en œuvre, dans l'extrudeuse, après plastification de l'amidon par le plastifiant polymérique et, en outre, dans un milieu dont la teneur en eau a été obligatoirement abaissée à un niveau très bas, à savoir inférieur à 1%, pour permettre une bonne plastification de l'amidon et une bonne compatibilisation entre l'amidon et son plastifiant polymérique.
- le brevet EP 1 229 075 décrit des compositions thermoplastiques à base d'amidon contenant un phyllosilicate ou un silicate stratifié et, éventuellement, un polymère synthétique. Lorsqu'il y a utilisation, comme dans l'Exemple 4 dudit brevet, d'un polymère synthétique, en l'occurrence un polyester biodégradable de marque « Bionolle » ou « Ecoflex », il apparait que l'amidon est mis en œuvre simultanément, entre autres, à ce polymère synthétique se présentant sous forme solide (granulés) et au plastifiant d'amidon (mélange glycérol / eau).
- l'article intitulé « Effects of Starch Moisture on Properties on Wheat Starch/Poly(Lactic Acid) Blend Containing Methylenediphenyl Diisocyanate », de Wang et al., publié dans Journal of Polymers and the Environment, Vol. 10, No 4, Octobre 2002, concerne la préparation de compositions polymériques à base d'amidon et d'un polymère biodégradable, à savoir du PLA. Il apparait que le plastifiant de l'amidon, en l'occurrence l'eau, est mis en œuvre par mélange avec, simultanément, l'amidon et le polymère à l'état solide (« PLA chips ») et préalablement broyé.

Dans le cadre de ses recherches visant également à mettre au point des matériaux polymères présentant une teneur importante en amidon, la Demanderesse a récemment envisagé l'introduction d'un composant amylacé préalablement plastifié par un agent plastifiant approprié. Le procédé mis au point par la Demanderesse décrit notamment dans les demandes françaises n° 08 50659 et 08 50660, déposées le 1er février 2008, comprend le mélange thermomécanique d'un amidon granulaire et d'un agent plastifiant pour la préparation, par extrusion, de granulés d'une composition amylacée thermoplastique. Les granulés obtenus sont ensuite incorporés dans une matrice de polymère synthétique fondu. La présence d'un agent bifonctionnel, tel que le méthylènediphényl-diisocyanate, capable de réagir avec le plastifiant et l'amidon, voire aussi avec le polymère, permet l'obtention de compositions à haute teneur en amidon présentant de bonnes propriétés mécaniques. La préparation de ces compositions se fait par extrusion réactive.

Toutefois, lorsque la Demanderesse a utilisé pour la préparation de telles compositions des polymères synthétiques à température de fusion élevée, tels que le polypropylène ou le polyéthylène, elle a observé une coloration indésirable des compositions obtenues, allant du jaune au marron foncé. Cette coloration, attribuée à la dégradation thermique de l'amidon, était d'autant plus prononcée que les températures et durées d'extrusion étaient élevées.

Ces phénomènes de coloration n'avaient pas été observés précédemment pour l'utilisation d'amidon granulaire en tant que charges de polymères thermoplastiques, car l'amidon natif granulaire, non plastifié, se révèle considérablement moins sensible à une dégradation thermique que l'amidon plastifié.

Le brevet US 6 844 380 divulgue un procédé de préparation de compositions à base de polymère thermoplastique et d'une composante amylacée plastifiée, comprenant la préparation, dans une première extrudeuse, d'une composition amylacée gélatinisée et plastifiée, l'introduction dans la première extrudeuse d'un polymère thermoplastique à l'état fondu provenant d'une deuxième extrudeuse, connectée à la première, et mélange direct des deux composantes jusqu'à obtention d'une composition homogène. Le procédé décrit dans ce brevet présente ainsi les mêmes inconvénients que celui mis au point précédemment par la Demanderesse, à savoir une exposition prolongée d'une composition amylacée préalablement plastifiée à des températures élevées susceptibles d'entraîner une dégradation thermique et/ou une coloration importante de la matière amylacée plastifiée.

Il existait ainsi un besoin pour un procédé de préparation de compositions à base de polymère synthétique et de matière amylacée plastifiée, qui permettait, même pour des polymères synthétiques à température de fusion élevée, par exemple supérieure à 130 °C, de réduire le plus possible la dégradation thermique de la matière amylacée et de limiter voire de supprimer ainsi la coloration des compositions finales obtenues. Ceci, tout en conservant, voire en améliorant, les propriétés mécaniques des compositions finales selon l'état de la technique.

La Demanderesse en cherchant à limiter la coloration par thermodégradation des matières amylacées plastifiées, a découvert, contre toute attente, qu'il n'était pas nécessaire de plastifier le composant amylacé par un agent plastifiant préalablement à son incorporation dans le polymère synthétique et que cette plastification pouvait se faire très efficacement en présence dudit polymère synthétique. La Demanderesse a, à cette occasion, observé qu'en mettant en œuvre le processus de plastification de la matière amylacée par l'agent plastifiant postérieurement au ramollissement ou à la fusion du polymère synthétique, on obtenait des compositions finales comparativement moins colorées. Cette moindre coloration était attribuée à une moindre thermodégradation de la matière amylacée qui, introduite à l'état non plastifié, résistait mieux à la dégradation que sous forme plastifiée.

La présente invention est ainsi basée sur le fait que l'on incorpore dans le polymère synthétique, fondu, non pas un composant amylacé préalablement plastifié, mais *séparément* un composant amylacé non plastifié et un agent plastifiant de celui-ci.

Le terme « séparément » tel qu'il est utilisé ici n'exclut pas l'introduction simultanée du composant amylacé et de l'agent plastifiant dans le réacteur, même sous forme de mélange. Ce terme exclut par contre tout procédé comprenant l'introduction, dans le réacteur contenant le polymère, d'une composition amylacée plastifiée obtenue par traitement thermomécanique d'un composant amylacé et d'un agent plastifiant de celui-ci, tel que les procédés décrits dans les demandes françaises n° 08 50659 et 08 50660 de la Demanderesse ou dans le brevet US 6 844 380.

La présente invention a pour objet un procédé de préparation d'une composition à base de polymère synthétique et de composant amylacé, ledit procédé comprenant :
- l'introduction, dans un réacteur, par exemple une extrudeuse, contenant un polymère synthétique (composant 1) fondu soumis à des forces de cisaillement et chauffé à une température comprise entre 60°C et 260°C, d'un composant amylacé non plastifié (composant 2) et d'un agent plastifiant de celui-ci (composant 3), et
- le malaxage du mélange obtenu, à une température comprise entre 60°C et 260°C, avec une force de cisaillement et pendant une durée suffisantes, pour obtenir la plastification du composant amylacé (composant 2) par l'agent plastifiant (composant 3) et un mélange homogène du polymère synthétique et du composant amylacé plastifié, caractérisé en ce que
le polymère synthétique est choisi dans le groupe comprenant les polyéthylènes (PE) et polypropylènes (PP), fonctionnalisés et non fonctionnalisés, les polyamides (PA), les polyuréthanes thermoplastiques (TPU), les copolymères styrène-éthylène-butylène-styrène (SEBS), les poly(téréphtalate d'éthylène) amorphes (PETG) et les mélanges de ceux-ci;
l'agent plastifiant est choisi parmi le glycérol, les polyglycérols, l'isosorbide, les sorbitans, le sorbitol, le mannitol, les sirops de glucose hydrogénés, et les mélanges de ces produits;
le composant amylacé est un amidon natif de céréales, de tubercules ou de légumineuses, et de mélanges de tels amidons;
le composant amylacé est incorporé dans le polymère synthétique à raison de 20 à 400% en poids sec, rapporté au poids sec du polymère synthétique présent dans la composition;
l'agent plastifiant est mis en oeuvre à raison de 10 à 150 parts en poids pour 100 parts en poids de composant amylacé;
l'agent plastifiant est introduit dans le réacteur et incorporé dans le polymère synthétique fondu avant l'introduction du composant amylacé non plastifié.

La température à laquelle se trouve le polymère synthétique fondu lorsqu'il est mis en contact du composant amylacé non plastifié peut être identique ou non à celle à laquelle il est mis en contact avec l'agent plastifiant du composant amylacé.

En outre, la température à laquelle se fait ensuite la plastification du composant amylacé par son plastifiant peut également être identique ou non à cette température.

En tout état de cause, l'ensemble de ces températures sont comprises entre 60 °C et 260 °C. De préférence, elles se situent entre 80 °C et 240 °C.

Ces températures peuvent notamment être comprises :
- entre 120 °C et 200 °C, en particulier entre 130 °C et 190 °C, quand le polymère synthétique est choisi parmi les polyoléfines, en particulier parmi les polyéthylènes (PE) et polypropylènes (PP), fonctionnalisés et non fonctionnalisés,
- entre 100 °C et 230 °C quand le polymère synthétique est choisi parmi les polyamides (PA), les polyuréthanes thermoplastiques (TPU), les copolymères styrène-butylène-styrènes (SBS) et styrène-éthylène-butylène-styrènes (SEBS), de préférence fonctionnalisés, notamment par des motifs anhydride maléique, et
- entre 100 °C et 180 °C quand le polymère synthétique est choisi parmi les poly(téréphtalate d'éthylène) amorphes (PETG).

De préférence, les températures mentionnées se situent entre 80 °C et 240 °C. Elles peuvent se situer dans les fourchettes encore plus préférentielles décrites ci-dessus en fonction de la nature du polymère mis en œuvre (polyoléfines, TPU, PA, SBE et SEBS, notamment fonctionnalisés, PETG).

Comme expliqué ci-avant, les composants 2 et 3 sont introduits *séparément,* soit l'un après l'autre soit simultanément.

Dans une variante du procédé, une partie ou la totalité du composant amylacé non plastifié (composant 2) ou de l'agent plastifiant (composant 3) est introduite dans le réacteur en même temps que le polymère synthétique préalablement ramolli ou fondu.

Ce procédé permet non seulement d'obtenir des compositions composites finales (polymère synthétique/matière amylacée) moins colorées tout en présentant des propriétés mécaniques aussi bonnes voire améliorées, mais est également plus simple à mettre en œuvre que les procédés de l'état de la technique qui :
- soit comprennent une étape séparée d'extrusion, de granulation et de séchage éventuel de la composition amylacée plastifiée (demandes françaises n° 08 50659 et 08 50660) puis une étape de mélange de cette composition amylacée plastifiée avec le polymère synthétique fondu,
- soit nécessitent une installation complexe comprenant deux extrudeuses, l'une étant connectée latéralement à l'autre (US 6 844 380) afin de permettre le mélange de la composition amylacée préalablement plastifiée avec le polymère synthétique fondu.

Le procédé de la présente invention, au contraire, peut être mis en œuvre dans un réacteur unique, de préférence une extrudeuse unique, dans lequel les au moins trois composants essentiels (polymère synthétique, agent plastifiant et composant amylacé non plastifié) sont introduits séparément.

On entend par « agent plastifiant » du composant amylacé toute molécule de faible masse moléculaire, c'est-à-dire ayant de préférence une masse moléculaire inférieure à 5000, qui, lorsqu'elle est incorporée au composant amylacé par un traitement thermomécanique à une température généralement au moins égale à 35°C, de préférence comprise entre 60°C et 260°C et mieux encore entre 65°C et 200°C, aboutit à une diminution de la température de transition vitreuse du composant amylacé et/ou à une réduction de la cristallinité de celui-ci.

On entend par « composant amylacé » tout oligomère ou polymère de motifs D-glucose liés entre eux par des liaisons alpha-1,4 et éventuellement d'autres liaisons, de type alpha-1,6, alpha-1,2, alpha-1,3 ou autres.

Lorsqu'on utilise dans la présente invention le terme « non plastifié » en relation avec « composant amylacé » ou « amidon granulaire », cela n'implique pas forcément l'absence de tout agent plastifiant. Le composant amylacé, en particulier l'amidon, peut contenir une quantité d'un ou plusieurs composés figurant dans la liste des agents plastifiants, qui englobe notamment l'eau. La Demanderesse, en utilisant le terme « non plastifié » entend préciser que le composant amylacé n'a pas subi de traitement thermomécanique en présence dudit agent plastifiant, ayant eu pour conséquence un abaissement significatif de sa température de transition vitreuse et/ou de son taux de cristallinité. Le composant amylacé peut ainsi être apporté sous forme de poudre ou de suspension, y compris dans l'eau ou un autre plastifiant, dès lors qu'il n'est pas plastifié.

Comme expliqué ci-dessus, le composant amylacé et l'agent plastifiant sont introduits séparément dans le réacteur, soit en même temps soit l'un après l'autre, avec, entre ces ajouts successifs, éventuellement une phase de malaxage/chauffage.

Le composant amylacé non plastifié et l'agent plastifiant peuvent être introduits dans le réacteur par deux entrées différentes entre elles et qui, en outre, peuvent être différentes de l'entrée du polymère synthétique fondu.

Lorsque ces deux composants (composant amylacé, plastifiant) sont ajoutés simultanément, cet ajout peut se faire par deux entrées séparées, mais également par une même entrée. Autrement dit, un mode de réalisation prévoyant l'introduction dans le réacteur d'un mélange composant amylacé non plastifié/agent plastifiant n'est pas exclu de la portée de la revendication indépendante.

Dans un mode de réalisation préféré, le composant amylacé non plastifié et l'agent plastifiant sont toutefois introduits dans le réacteur par deux entrées séparées, ces deux entrées étant avantageusement différentes de l'entrée du polymère synthétique fondu.

Comme mentionné précédemment, le plastifiant peut être introduit dans le réacteur avant, en même temps ou bien après le composant amylacé non plastifié.

Dans un mode de réalisation particulièrement avantageux, l'agent plastifiant est introduit dans le réacteur et incorporé dans le polymère synthétique avant l'introduction du composant amylacé non plastifié. La Demanderesse a en effet constaté, avec surprise, que l'incorporation de l'agent plastifiant dans le polymère synthétique avant introduction du composant amylacé non plastifié, n'empêchait pas la plastification ultérieure de manière efficace de ce dernier par l'agent plastifiant.

L'introduction du composant amylacé après celle de l'agent plastifiant présente l'avantage d'exposer le composant amylacé le moins longtemps possible aux conditions thermomécaniques régnant dans le réacteur, susceptibles d'induire la thermodégradation du composant amylacé et la coloration indésirable des compositions finales.

Il est particulièrement avantageux et simple de mettre en œuvre le procédé selon l'invention en utilisant, comme réacteur, une extrudeuse. Il peut s'agir d'une extrudeuse à simple vis ou double vis, à co-rotation ou contre-rotation. De manière particulièrement avantageuse, l'extrudeuse est une extrudeuse à double vis, en particulier à co-rotation.

Dans le procédé de la présente invention, l'ensemble des étapes de malaxage du polymère synthétique seul ou de n'importe quel mélange multi-composants englobant notamment :
le mélange polymère/agent plastifiant,
le mélange polymère/agent plastifiant/composant amylacé,
le mélange polymère/agent plastifiant/composant amylacé/agent de liaison (défini ci-après)
sont mises en œuvre à une température comprise entre 60 °C et 260 °C, de préférence comprise entre 80 °C et 240°C

Elles peuvent se situer dans les fourchettes encore plus préférentielles décrites ci-dessus en fonction de la nature du polymère mis en œuvre (polyoléfines, TPU, PA, SBE et SEBS, notamment fonctionnalisés, PETG).

Le maintien de ces températures nécessite généralement, mais pas systématiquement, l'apport de chaleur par un dispositif de chauffage approprié. Dans certains cas, le maintien de la température peut être obtenu, de manière connue, grâce aux forces de cisaillement et de compression du mélange des ingrédients, associées à des moyens d'isolation thermique du réacteur.

Il n'est pas exclu également, dans le cadre de l'invention, d'introduire le polymère synthétique thermoplastique dans le réacteur dans un état préalablement fondu, et notamment à une température suffisante de sorte que la seule chaleur apportée par ledit polymère soit suffisante pour assurer la plastification ultérieure dans ledit réacteur du composant amylacé par le plastifiant.

Le choix du profil de température en fonction de la nature et de la viscosité du polymère synthétique, des forces de cisaillement mises en œuvre, des proportions des différents composants du mélange est à la portée de l'homme du métier.

Selon l'invention, le composant amylacé non plastifié peut être mis en œuvre avec son eau de constitution et présenter ainsi avantageusement une teneur en eau, généralement comprise entre 10 % et 20 %, notamment comprise entre 12% et 20%, en poids. Il peut également être mis en œuvre après avoir été séché de manière plus ou moins importante, par exemple de telle sorte que sa teneur en eau a été préalablement abaissée à une valeur inférieure à 10 %, en particulier inférieure à 7 %, en poids. La teneur en eau du composant amylacé non plastifié mis en œuvre peut même être inférieure à 5 %, voire inférieure à 2,5 %, en poids.

Dans une variante du procédé de la présente invention, en particulier lorsque le polymère synthétique, par exemple un polyamide ou un polyester, le composant amylacé et/ou l'agent plastifiant comprend une fraction non négligeable d'eau, le procédé comprend en outre une étape de séchage du mélange homogène du polymère et du composant amylacé plastifié. Ce séchage est réalisé de préférence au sein même du réacteur, en particulier par une mise en dépression. Ainsi, la pression peut être abaissée et ajustée à une valeur comprise, par exemple, entre 2 et 1000 millibars, en particulier entre 10 et 800 millibars.

Après séchage, le mélange homogène séché présente de préférence une teneur en eau inférieure à 5%, plus préférentiellement inférieure à 2,5% et mieux encore inférieure à 1,5%.

Lorsque le procédé comprend une étape optionnelle d'introduction et de réaction d'un agent de liaison, décrite plus en détail ci-après, l'étape de séchage du mélange homogène est mise en œuvre avant l'introduction de l'agent de liaison dans le réacteur. Cette étape de séchage préalable est d'ailleurs particulièrement utile lorsqu'on utilise un agent de liaison comportant des fonctions réactives susceptibles d'être hydrolysées.

Le composant amylacé non plastifié est un amidon granulaire. On entend ici par « amidon granulaire », un amidon natif ou modifié physiquement, chimiquement ou par voie enzymatique, ayant conservé, au sein des granules d'amidon, une structure semi-cristalline similaire à celle mise en évidence dans les grains d'amidon présents naturellement dans les organes et tissus de réserve des végétaux supérieurs, en particulier dans les graines de céréales, les graines de légumineuses, les tubercules de pomme de terre ou de manioc, les racines, les bulbes, les tiges et les fruits. Cet état semi-cristallin est essentiellement dû aux macromolécules d'amylopectine, l'un des deux constituants principaux de l'amidon. A l'état natif, les grains d'amidon présentent un taux de cristallinité qui varie de 15 à 45 %, et qui dépend essentiellement de l'origine botanique de l'amidon et du traitement éventuel qu'il a subi.

L'amidon granulaire, placé sous lumière polarisée, présente une croix noire caractéristique, dite croix de Malte, typique de l'état granulaire. Pour une description plus détaillée de l'amidon granulaire, on pourra se référer au chapitre II intitulé « Structure et morphologie du grain d'amidon » de S.Perez, dans l'ouvrage « Initiation à la chimie et à la physico-chimie macromoléculaires », Première édition 2000, Volume 13, pages 41 à 86, Groupe Français d'Etudes et d'Applications des Polymères.

Selon l'invention, l'amidon granulaire peut provenir de toutes origines botaniques, y compris un amidon granulaire riche en amylose ou, inversement, riche en amylopectine (waxy). Il s'agit d'amidon natif de céréales telles que le blé, le maïs, l'orge, le triticale, le sorgo ou le riz, de tubercules tels que la pomme de terre ou le manioc, ou de légumineuses telles que le pois et le soja, et de mélanges de tels amidons.

L'amidon granulaire présente généralement un taux de solubles à 20°C dans l'eau déminéralisée, inférieur à 5 % en masse. Il est de préférence quasiment insoluble dans l'eau froide.

Le composant amylacé est incorporé dans le polymère synthétique à raison de 20 à 400 % en poids sec, rapporté au poids sec du polymère synthétique présent dans la composition.

La Société Demanderesse a trouvé que ce ratio est avantageusement compris entre 20 et 400 %, de préférence entre 20 et 200 % et en particulier entre 25 et 150 %, notamment lorsque le polymère synthétique était choisi dans le groupe comprenant les polyéthylènes (PE) et polypropylènes (PP), fonctionnalisés et non fonctionnalisés, les polyamides (PA), les polyuréthanes thermoplastiques (TPU), les copolymères styrène-éthylène-butylène-styrène (SEBS), de préférence fonctionnalisés, les poly(téréphtalate d'éthylène) amorphes (PETG) et les mélanges de ceux-ci.

Le troisième composant utilisé dans le procédé de la présente invention, à savoir l'agent plastifiant, est le glycérol, les polyglycérols, l'isosorbide, les sorbitans, le sorbitol, le mannitol, et les sirops de glucose hydrogénés, et les mélanges quelconques de ces produits.

Qu'il prévoit ou non l'incorporation d'un agent de liaison décrit plus en détail ci-après, le procédé de la présente invention peut impliquer une quantité de plastifiant utilisée qui, de manière avantageuse, est relativement élevée par rapport à la quantité de plastifiant utilisée dans les amidons plastifiés de l'art antérieur. L'agent plastifiant est mis en œuvre à raison de 10 à 150 parts en poids, de préférence à raison de 25 à 120 parts en poids et en particulier à raison de 40 à 120 parts en poids, pour 100 parts en poids de composant amylacé.

Le composant amylacé (composant 2), son agent plastifiant (composant 3) et le polymère synthétique (composant 1) peuvent représenter, ensemble, 100% en poids (sec / sec) de la composition polymérique, notamment thermoplastique, obtenue selon l'invention.

Des additifs de toutes natures, dont ceux détaillés ci-après, peuvent cependant être incorporés dans ladite composition. Bien que la proportion de ces ingrédients supplémentaires puisse être assez importante, le composant amylacé (composant 2), son agent plastifiant (composant 3) et le polymère synthétique (composant 1) représentent, ensemble, de préférence au moins 30 %, plus préférentiellement au moins 40 % et en particulier au moins 50 %, en poids (sec/sec) de ladite composition.

Selon une variante préférentielle, cette proportion globale est au moins égale à 80% en poids (sec/sec) de ladite composition.

La présente invention a en outre pour objet une composition polymérique susceptible d'être obtenue selon le procédé décrit précédemment, comprenant des proportions très particulières en composant amylacé (composant 2), en son agent plastifiant (composant 3) et en polymère synthétique (composant 1), ladite composition étant caractérisée par le fait qu'elle comprend :
- de 15 à 85 %, de préférence de 15 à 80 %, en poids d'au moins un composant amylacé (composant 2),
- de 4 à 35 % en poids d'au moins un plastifiant dudit composant amylacé (composant 3), et
- de 5 à 80 %, de préférence de 15 à 80 %, en poids d'au moins un polymère synthétique (composant 1), notamment thermoplastique,
ces pourcentages étant exprimés en poids sec et rapportés au poids sec total de ladite composition.

Toutes les variantes et gammes préférées décrites ci-avant ou ci-après concernant la nature et les proportions respectives des différents ingrédients s'appliquent également à cette composition selon l'invention.

On peut notamment lister les variantes avantageuses suivantes, lesquelles peuvent, ou non, être associées entre elles:
- ladite composition comprend de 15 à 70 %, de préférence de 15 à 60 %, en poids d'au moins un composant amylacé, de 4 à 25 % en poids d'au moins un plastifiant dudit composant amylacé et de 15 à 80 %, de préférence de 35 à 80 %, en poids d'au moins un polymère synthétique,
- le polymère synthétique est non biodégradable,
- le polymère synthétique est non hydrosoluble,
- le polymère synthétique est choisi dans le groupe comprenant les polyéthylènes (PE) et polypropylènes (PP), fonctionnalisés et non fonctionnalisés, les polyamides (PA), les polyuréthanes thermoplastiques (TPU), les copolymères styrène-éthylène-butylène-styrène (SEBS), de préférence fonctionnalisés, les poly(téréphtalate d'éthylène) amorphes (PETG) et les mélanges de ceux-ci,
- le polymère synthétique est un polymère non biodégradable ou non compostable au sens des normes EN 13432, ASTM D 6400 et ASTM D 6868, et/ou
- le polymère synthétique est un polymère contenant au moins 50 %, de préférence au moins 70 %, en particulier plus de 80 %, de carbone d'origine renouvelable au sens de la norme ASTM D 6852 et/ou la norme ASTM D 6866, par rapport à l'ensemble du carbone présent dans ledit polymère.

Parmi les additifs, on peut en particulier incorporer à ladite composition, au moins un agent de liaison.

Comme il résulte des enseignements des demandes françaises n° 08 50659 et 08 50660 de la Demanderesse, il peut être particulièrement avantageux d'incorporer dans les compositions de la présente invention un agent de liaison, c'est-à-dire un composé comportant au moins deux fonctions capables de réagir et de former des liaisons covalentes avec des fonctions réactives présentes sur le composant amylacé (groupes OH), sur l'agent plastifiant (p.ex. groupes OH, C=O ou NH) et, éventuellement sur le polymère synthétique. La réaction de cet agent de liaison aide à lier les différents composants entre eux, améliore ainsi leur compatibilité et confère aux compositions finales obtenues d'excellentes propriétés mécaniques et une bonne résistance à l'eau.

Le procédé de la présente invention peut comprendre par conséquent, en outre, une étape d'incorporation d'au moins un agent de liaison choisi parmi les composés porteurs d'au moins deux fonctions, libres ou masquées, identiques ou différentes, choisies parmi les fonctions isocyanate, carbamoylcaprolactame, époxyde, halogéno, acide protonique, anhydride d'acide, halogénure d'acyle, oxychlorure, trimétaphosphate et alcoxysilane.

Cette étape optionnelle d'incorporation d'un agent de liaison est bien entendu de préférence postérieure à l'incorporation du composant amylacé non plastifié et de l'agent plastifiant dans le polymère synthétique. En effet, l'introduction d'un tel agent à un stade précoce pourrait entraîner l'épaississement ou la réticulation indésirable du système avant l'incorporation de l'ensemble des composés que l'on souhaite lier les uns aux autres.

On peut citer à titre d'exemples d'agents de liaison :
- les diisocyanates, de préférence le méthylènediphényl-diisocyanate (MDI), l'isophorone-diisocyanate (IPDI), le dicyclohexylméthane-diisocyanate (H12MDI), le toluène-diisocyanate (TDI), le naphthalène-diisocyanate (NDI), l'hexaméthylène-diisocyanate (HMDI) et la lysine-diisocyanate (LDI),
- les dicarbamoylcaprolactames, de préférence le 1,1'-carbonyl-bis-caprolactame,
- les diépoxydes,
- les composés comportant une fonction époxyde et une fonction halogéno, de préférence l'épichlorhydrine,
- les diacides organiques, de préférence l'acide succinique, l'acide adipique, l'acide glutarique, l'acide oxalique, l'acide malonique, l'acide maléique et les anhydrides correspondants,
- les polyacides, de préférence l'acide mellitique et ses dérivés, tels que l'acide trimellitique ou l'acide pyromellitique,
- les oxychlorures, de préférence l'oxychlorure de phosphore,
- les trimétaphosphates, de préférence le trimétaphoshate de sodium, - les alcoxysilanes, de préférence le tétraéthoxysilane,
- les composés hétérocycliques, de préférence les bis-oxazolines, les bis-oxazolin-5-ones et les bis-azlactones,
- les dérivés de diesters méthyléniques ou éthyléniques, de préférence les dérivés de carbonates de méthyle ou d'éthyle.

On peut bien entendu utiliser un mélange de plusieurs de ces composés.

De manière particulièrement préférée on utilise en tant qu'agent de liaison un diisocyanate, et parmi ceux-ci l'isophorone-diisocyanate (IPDI) ou le dicyclohexylméthane-diisocyanate (H12MDI) qui permettent d'obtenir des compositions finales particulièrement peu colorées.

La quantité d'agent de liaison est généralement comprise entre 0,01 et 15 %, de préférence entre 0,1 et 12 % et plus préférentiellement encore entre 0,1 et 9 %, rapportée au poids total du mélange contenant le polymère synthétique, le composant amylacé et l'agent plastifiant.

Le polymère synthétique peut être en outre un polymère synthétisé à partir de monomères issus de ressources naturelles renouvelables à brève échéance comme les plantes, les microorganismes ou les gaz, notamment à partir de sucres, de glycérine, d'huiles ou de leurs dérivés tels que des alcools ou des acides, mono-, di- ou polyfonctionnels, et en particulier à partir de molécules telles que le bio-éthanol, le bio-éthylèneglycol, le bio-propanediol, le 1,3-propanediol biosourcé, le bio-butane-diol, l'acide lactique, l'acide succinique biosourcé, le glycérol, l'isosorbide, le sorbitol, le saccharose, les diols dérivés d'huiles végétales ou animales et les acides résiniques extraits de pin.

Il peut être notamment du polyéthylène issu de bio-éthanol, du polypropylène issu de bio-propanediol, des polyamides à base d'huile de ricin ou de polyols végétaux, et des polyuréthanes à base par exemple, de diols végétaux, de glycérol, d'isosorbide, de sorbitol ou de saccharose.

De préférence, le polymère synthétique est choisi parmi les polyéthylènes (PE) et polypropylènes (PP), non fonctionnalisées ou fonctionnalisées, notamment par des motifs silane, des motifs acryliques ou des motifs anhydride maléique, les polyamides (PA) et copolyamides, les polyuréthanes thermoplastiques (TPU), les copolymères styrène-éthylène-butylène-styrène (SEBS), de préférence fonctionnalisés, notamment par des motifs anhydride maléique, les poly(téréphtalate d'éthylène) amorphes (PETG), et les mélanges de ceux-ci.

Les polymères préférentiels précités, par exemple les polyoléfines et TPU, sont en effet des polymères nécessitant des températures de mise en œuvre relativement élevées et le bénéfice du procédé de la présente invention, à savoir la protection contre la thermo-dégradation de l'amidon, est particulièrement important pour ce groupe de polymères.

En outre, ces polymères, par exemple les polyoléfines et TPU, ne peuvent pas, en pratique industrielle et comme l'a constaté la Demanderesse, être introduits conjointement au composant amylacé et à son agent plastifiant. Une mise en oeuvre de granulés de tels polymères, par exemple de polypropylène, en présence du composant amylacé et de son agent plastifiant génère une masse visqueuse ou « pâte » qui ne peut être introduite dans une extrudeuse sauf à rajouter un grand volume d'eau pour fluidifier ladite masse. Ceci a pour effet, compte-tenu de la différence de densité entre les composants de cette masse fluidifiée, d'opérer une séparation des granulés de polymère des autres composants et donc une hétérogénéité du mélange résultant et une difficulté à le doser. C'est là également un bénéfice du procédé de la présente invention.

Avantageusement, le polymère synthétique présente un poids moléculaire moyen en poids compris entre 8500 et 10 000 000 daltons, en particulier entre 15 000 et 1 000 000 daltons.

Selon une autre variante préférentielle, le polymère synthétique est un polymère non biodégradable ou non compostable au sens des normes EN 13432, ASTM D 6400 et ASTM D 6868.

Il peut notamment être non biodégradable.

Selon une autre variante préférentielle, le polymère synthétique est un polymère contenant au moins 15 %, de préférence au moins 30 %, en particulier au moins 50 %, mieux encore au moins 70 %, voire plus de 80 %, de carbone d'origine renouvelable au sens de la norme ASTM D 6852 et/ou la norme ASTM D 6866, par rapport à l'ensemble du carbone présent dans ledit polymère.

Enfin, selon une autre variante préférentielle, le polymère synthétique est non hydrosoluble.

Comme il a été expliqué ci-avant, un agent de liaison peut être incorporé avantageusement dans les compositions de la présente invention. Pour qu'un tel agent de liaison puisse, en outre, réagir avec le polymère synthétique, au moins une partie de celui-ci doit comporter des groupes réactifs, c'est-à-dire des groupes capables de réagir avec au moins l'une des fonctions de l'agent de liaison énumérées ci-avant.

Bien que la présence de tels groupes réactifs sur au moins une fraction du polymère synthétique soit particulièrement utile et avantageuse lorsque le procédé de la présente prévoit l'utilisation d'un agent de liaison, la présence de groupes réactifs sur le polymère n'est pas forcément liée à l'introduction d'un agent de liaison dans le réacteur au cours du procédé de la présente invention.

La Demanderesse envisage en effet également l'utilisation de polymères synthétiques comportant des groupes réactifs même lorsqu'aucun agent de liaison n'est incorporé dans la composition. Les compositions obtenues à la fin d'un tel procédé ne sont alors pas réticulées, mais peuvent l'être ultérieurement au cours d'un procédé d'extrusion réactive séparé, après incorporation d'un agent de liaison approprié.

Les groupes réactifs du polymère synthétique sont notamment choisis parmi les fonctions acide carboxylique, anhydride d'acide, amine, amide, carbonate, sulfone, imide, uréthane, époxyde, hydroxyle, alcoxysilane, oxazoline, oxazolin-5-one et ester.

La fonctionnalisation du polymère, par exemple d'une polyoléfine, peut d'ailleurs avoir lieu au sein même du réacteur, par exemple par extrusion réactive. Cette fonctionnalisation peut notamment se faire en ligne sur un polymère à l'état ramolli ou fondu avant que celui-ci ne soit mis en contact avec le composant amylacé et/ou le plastifiant.

Des compositions particulièrement avantageuses obtenues conformément à l'invention sont caractérisées en ce qu'elles comprennent :
- de 5 à 50 %, en poids, d'une polyoléfine choisie dans le groupe formé par le polyéthylène, le polypropylène, le polypropylène portant des groupes anhydride d'acide, le polyéthylène portant des groupes anhydride d'acide et des mélanges de ceux-ci, et
- de 50 à 95 %, en poids, d'un composant amylacé plastifié.

Au-delà des agents de liaison susmentionnés, la composition polymérique, notamment thermoplastique, selon l'invention peut également comprendre différents autres additifs. Il peut s'agir de produits visant à améliorer ses propriétés physico-chimiques, en particulier son comportement de mise en œuvre et sa durabilité ou bien ses propriétés mécaniques, thermiques, conductrices, adhésives ou organoleptiques.

L'additif peut être un agent améliorateur ou d'ajustement des propriétés mécaniques ou thermiques choisi parmi les minéraux, les sels et les substances organiques, en particulier parmi les agents de nucléation comme le talc, les agents compatibilisants comme les agents tensio-actifs, les agents améliorateurs de la résistance aux chocs ou aux rayures comme le silicate de calcium, les agents régulateurs de retrait comme le silicate de magnésium, les agents piégeurs ou désactivateurs d'eau, d'acides, de catalyseurs, de métaux, d'oxygène, de rayons infra-rouges, de rayons UV, les agents hydrophobants comme les huiles et graisses, les agents hygroscopiques comme le pentaérythritol, les agents rétardateurs de flamme et les agents anti-feu comme les dérivés halogénés, les agents anti-fumée, les charges de renforcement, minérales ou organiques, comme les argiles, le noir de carbone, le talc, les fibres végétales, les fibres de verre, de polyacrylonitrile ou de kevlar.

L'additif peut être également un agent améliorateur ou d'ajustement des propriétés conductrices ou isolantes vis-à-vis de l'électricité ou de la chaleur, de l'étanchéité par exemple à l'air, à l'eau, aux gaz, aux solvants, aux corps gras, aux essences, aux arômes, aux parfums, choisi notamment parmi les minéraux, les sels et les substances organiques, en particulier parmi les agents de nucléation comme le talc, les agents compatibilisants comme le tensio-actifs, les agents piégeurs ou désactivateurs d'eau, d'acides, de catalyseurs, de métaux, d'oxygène ou du rayonnement infra-rouge, les agents hydrophobants comme les huiles et graisses, les agents perlants, les agents hygroscopiques comme le pentaérythritol, les agents de conduction ou de dissipation de la chaleur comme les poudres métalliques, les graphites et les sels, et les charges de renforcement micrométriques comme les argiles et le noir de carbone.

L'additif peut être encore un agent améliorateur des propriétés organoleptiques, notamment :
- des propriétés odorantes (parfums ou agents de masquage d'odeur),
- des propriétés optiques (agents de brillance, agents de blancheur tels que le dioxyde de titane, colorants, pigments, exhausteurs de colorants, opacifiants, agents de matité tels que le carbonate de calcium, agents thermochromes, agents de phosporescence et de fluorescence, agents métallisants ou marbrants et agents anti-buée),
- des propriétés sonores (sulfate de baryum et barytes), et
- des propriétés tactiles (matières grasses).

L'additif peut être aussi un agent améliorateur ou d'ajustement des propriétés adhésives, notamment de l'adhésion vis-à-vis des matières cellulosiques comme le papier ou le bois, des matières métalliques comme l'aluminium et l'acier, des matériaux en verre ou céramiques, des matières textiles et des matières minérales, comme notamment les résines de pin, le colophane, les copolymères d'éthylène/alcool vinylique, les amines grasses, les agents lubrifiants, les agents de démoulage, les agents antistatiques et les agents anti-blocking.

Enfin, l'additif peut être un agent améliorateur de la durabilité du matériau ou un agent de contrôle de sa (bio)dégradabilité, notamment choisi parmi les agents hydrophobants comme les huiles et graisses, les agents anticorrosion, les agents antimicrobiens comme Ag, Cu et Zn, les catalyseurs de dégradation comme les oxo-catalyseurs et les enzymes comme les amylases.

La présente invention a également pour objet les compositions susceptibles d'être obtenues par un procédé tel que décrit ci-dessus.

De telles compositions, bien qu'elles puissent être chimiquement proches de celles décrites dans les demandes n° 08 50659 et 08 50660, diffèrent de celles-ci par une coloration moins prononcée, voire absente, due à une moindre dégradation thermique du composant amylacé incorporé.

Les compositions de la présente invention présentent de préférence une couleur blanche à jaune clair.

Cette coloration peut notamment être caractérisée par la méthode colorimétrique décrite ci-après, basée sur le principe du CIE L*a*b*, modèle de représentation international des couleurs (ci-après « méthode CIELab »).

L'instrument de mesure utilisé pour cette détermination de couleur est un colorimètre de marque MINOLTA de type CR-200, dédié à ce type de mesure.

Le protocole de mesure est le suivant :
Les compositions, issues de l'extrudeuse, sont testées sous forme de granulés cylindriques présentant une longueur de 2 à 4 mm et un diamètre de 2 à 3 mm. Ils sont introduits dans un pot en plastique (5 cm de diamètre, 10 cm de hauteur) et ce, sur une épaisseur de 7 cm environ. La tête de lecture du colorimètre est ensuite appliquée perpendiculairement à la surface du pot, en contact avec les granulés, afin d'en déterminer la coloration. Trois mesures successives sont ainsi réalisées pour chaque point d'analyse de la surface des granulés. Ces mesures sont moyennées pour obtenir les valeurs L*a*b* au point d'observation.

Quatre séries de mesure sont effectuées sur chacun des échantillons soumis à l'essai, avec mélange du pot entre chaque série de mesures.

On détermine, pour chaque composition ainsi testée par la méthode CIELab :
- l'indice de clarté L*,
- la composante a*, et
- la composante b*

Et il apparait qu'en regard des compositions selon l'art antérieur pour lesquelles le composant amylacé est plastifié avant d'être mis en contact avec le polymère thermoplastique, les compositions de la présente invention présentent une coloration nettement améliorée et notamment:
- un indice de clarté L* très significativement augmenté et pouvant tendre vers 100,
- une composante a* abaissée et très proche de 0, et
- une composante b* très significativement abaissée et se rapprochant de 0.

Les compositions de la présente invention peuvent notamment être caractérisées par une coloration, mesurée selon la méthode CIELab précitée, telle que :
- leur indice de clarté L* est supérieur à 60, en particulier supérieur à 65, et
- leur composante b* est comprise entre 0 et +15, en particulier entre 0 et + 10.

Selon une variante, lesdites compositions présentent, de manière remarquable : a) un indice de clarté L* au moins égal à 70 et b) une composante b* comprise entre 0 et + 6.

Par ailleurs, lesdites compositions présentent généralement, comme mentionné, une composante a* proche de 0, généralement comprise entre -1 et + 3,5, en particulier entre - 0,5 et + 1,5.

De manière tout à fait remarquable, cette composante a* peut être comprise entre - 0,5 et + 0,5.

A la connaissance de la Demanderesse il n'existait pas jusqu'alors de composition polymérique, notamment thermoplastique, caractérisée en ce que :
- d'une part elle contient de 15 à 85 %, de préférence de 15 à 80 %, en poids d'au moins un composant amylacé, de 4 à 35 % en poids d'au moins un plastifiant dudit composant amylacé et de 5 à 80 %, de préférence de 15 à 80 %, en poids d'au moins un polymère synthétique, et
- d'autre part elle présente un indice de clarté L* supérieur à 65 et une composante b* comprise entre 0 et + 10.

De manière tout à fait remarquable, cette nouvelle composition peut être en outre caractérisée en ce que :
- elle contient de 15 à 70 %, de préférence de 15 à 60 %, en poids d'au moins un composant amylacé, de 4 à 25 % en poids d'au moins un plastifiant dudit composant amylacé et de 15 à 80 %, de préférence de 35 à 80 %, en poids d'au moins un polymère synthétique, et/ou
- ledit polymère synthétique est choisi dans le groupe comprenant les polyéthylènes (PE) et polypropylènes (PP), fonctionnalisés et non fonctionnalisés, les polyamides (PA), les polyuréthanes thermoplastiques (TPU), les copolymères styrène-éthylène-butylène-styrène (SEBS), de préférence fonctionnalisés, les poly(téréphtalate d'éthylène) amorphes (PETG) et les mélanges de ceux-ci, et /ou
- elle présente un indice de clarté L* au moins égal à 70 et une composante b* comprise entre 0 et + 6, et/ou
- elle présente une composante a* comprise entre - 0,5 et + 1,5, notamment comprise entre - 0,5 et + 0,5.

En outre, les compositions de la présente invention présentent généralement un aspect translucide à transparent dès lors qu'elles ne contiennent pas ou quasiment pas (généralement moins de 1% en poids) de composés utilisés comme charges ou pigments tels que, par exemple, carbonate de calcium, calcite, dioxyde de titane, fibres de verre, fibres végétales, particules de bois...

Par ailleurs, les compositions de la présente invention, lorsqu'elles ont été préparées par extrusion réactive en présence d'un agent de liaison, ont des propriétés intéressantes au moins équivalentes à celles des compositions de l'état de la technique (demandes françaises n° 08 50659 et 08 50660).

Ces propriétés sont les suivantes :
- un taux d'insolubles dans l'eau, à 20 °C, supérieur à 72 %, de préférence supérieur à 80 %, en particulier supérieur à 90 % ;
- un taux de gonflement, après immersion dans l'eau à 20 °C pendant 24 heures, inférieur à 20 %, de préférence inférieur à 12 %, mieux encore inférieur à 6 % ;
- un allongement à la rupture supérieur à 40%, de préférence supérieur à 80% et en particulier supérieur à 90 % ;
- une contrainte maximale à la rupture supérieure à 4 MPa, de préférence supérieure à 6 MPa et en particulier supérieure à 8 MPa ;

De manière tout à fait remarquable, les compositions de la présente invention, lorsqu'elles ont été préparées par extrusion réactive en présence d'un agent de liaison, peuvent présenter une ou plusieurs propriétés encore améliorées par rapport à celles mentionnées ci-dessus et notamment :
- un taux d'insolubles dans l'eau, à 20 °C, supérieur à 95 %, voire à 97 % ou même à 98% ; et/ou
- un allongement à la rupture supérieur à 100 %, voire à 200 % ou même à 300 %; et/ou
- une contrainte maximale à la rupture supérieure à 10 MPa, voire à 12 MPa ou même à 13 MPa.

De manière particulièrement remarquable, lesdites compositions peuvent présenter un allongement à la rupture très élevé, à savoir supérieur à 400 %, voire à 500 % ou même à 700 %.

De manière également remarquable, les compositions de la présente invention, lorsqu'elles ont été préparées par extrusion réactive en présence, ou non, d'un agent de liaison, peuvent présenter :
- un allongement à la rupture supérieur à 100 %, voire à 200 % ou même à 300 %, et
- une contrainte maximale à la rupture supérieure à 15 MPa, voire à 20 MPa ou même à 25 MPa.

Ceci est notamment le cas lorsque :
- ladite composition comprend de 15 à 70 %, de préférence de 15 à 60 %, en poids d'au moins un composant amylacé, de 4 à 25 % en poids d'au moins un plastifiant dudit composant amylacé et de 15 à 80 %, de préférence de 35 à 80 %, en poids d'au moins un polymère synthétique, et que
- ledit polymère synthétique est choisi dans le groupe comprenant les polyéthylènes (PE) et polypropylènes (PP), fonctionnalisés et non fonctionnalisés, les polyamides (PA), les polyuréthanes thermoplastiques (TPU), les copolymères styrène-éthylène-butylène-styrène (SEBS), de préférence fonctionnalisés, les poly(téréphtalate d'éthylène) amorphes (PETG) et les mélanges de ceux-ci.

Dans de telles conditions, ladite composition peut notamment présenter un allongement à la rupture au moins égal à 350 %, notamment compris entre 350 et 1 500 %.

De manière également remarquable, les compositions de la présente invention, lorsqu'elles ont été préparées par extrusion réactive en présence, ou non, d'un agent de liaison, peuvent présenter un taux d'insolubles dans l'eau, à 20°C , mesuré comme décrit ci-après, supérieur à 90 %, de préférence supérieur à 95 % et notamment supérieur à 97 %.

Les caractéristiques qui viennent d'être mentionnées peuvent être mesurées selon les tests décrits ci-après.

### Mesure des taux d'insolubles et taux de gonflement :

On détermine le taux d'insolubles dans l'eau selon le protocole suivant :
(i) Sécher l'échantillon de composition à caractériser (12 heures à 80°C sous vide)
(ii) Mesurer la masse de l'échantillon (= Ms1) avec une balance de précision.
(iii) Immerger l'échantillon dans l'eau, à 20°C (volume d'eau en ml égal à 100 fois la masse en g d'échantillon).
(iv) Prélever l'échantillon après un temps défini de plusieurs heures.
(v) Eliminer l'excès d'eau en surface avec un papier absorbant, le plus rapidement possible.
(vi) Poser l'échantillon sur une balance de précision et suivre la perte de masse pendant 2 minutes (mesure de la masse toute les 20 secondes)
(vii) Déterminer la masse de l'échantillon gonflé par représentation graphique des prises de mesure précédentes en fonction du temps et extrapolation à t=0 de la masse (= Mg).
(viii) Sécher l'échantillon (pendant 24 heures à 80°C sous vide). Mesurer la masse de l'échantillon sec (= Ms2)
(ix) Calculer le taux d'insolubles, exprimé en pourcents, suivant la formule Ms2/Ms1.
(x) Calculer le taux de gonflement, en pourcents, selon la formule (Mg-Ms1)/Ms1.

### Mesure des propriétés mécaniques :

On détermine les caractéristiques mécaniques en traction d'une composition et ce, selon la norme NF T51-034 (Détermination des propriétés en traction) en utilisant un banc d'essai Lloyd Instrument LR5K, une vitesse de traction : 50 mm/min et des éprouvettes normalisées de type H2.

A partir des courbes de traction (contrainte = f(allongement), obtenues à une vitesse d'étirement de 50 mm/min, on relève, pour la composition testée, l'allongement à la rupture et la contrainte maximale à la rupture correspondante.

Les compositions conformes à l'invention sont notamment utilisables :
∘ comme résines destinées à la préparation directe d'objets injectés, extrudés ou filmés,
∘ comme résines destinées à être formulées sous forme de mélanges avec des charges, pigments et/ou fibres (mélanges de type « compound »), lesdits mélanges étant eux-mêmes destinés à la préparation directe d'objets, par exemple destinés à l'industrie automobile ou aéronautique,
∘ comme résines destinées à être formulées sous forme de mélanges avec des colorants, agents antistatiques, agents anti-blocking, agents stabilisants, agents nucléants, agents réticulants et/ou autres agents (mélanges de type « masterbatch »), lesdits mélanges étant eux-mêmes destinés à la préparation, en final, d'objets très divers,
∘ comme additifs de polymères synthétiques, en particulier de polyoléfines, en vue d'en améliorer les propriétés physico-chimiques et mécaniques, par exemple les propriétés anti-choc et de résistance à l'impact,
∘ comme sources de carbone d'origine renouvelable, aisément incorporables à des polymères synthétiques, notamment les polyoléfines.

### Exemple de référence 1 : préparation de compositions selon un procédé de l'art antérieur à partir d'un amidon thermoplastique

On retient pour cet exemple :
- en tant que composant amylacé (composant 2), un amidon de blé natif commercialisé par la Demanderesse sous le nom « Amidon de blé SP» présentant une teneur en eau voisine de 12%,
- en tant que plastifiant (composant 3), une composition aqueuse concentrée de polyols à base de glycérol et de sorbitol, commercialisée par la Demanderesse sous l'appellation POLYSORB ® G 84/41/00 ayant une teneur en eau de 16% environ,

A partir de ces deux produits, on prépare une composition d'amidon thermoplastique (TPS) selon l'art antérieur. Pour cela on alimente avec l'amidon de blé et le plastifiant une extrudeuse à double vis de marque TSA, ayant un diamètre (D) 26 mm et de longueur de 50 D, de manière à obtenir un débit matière total de 15 kg/h, le rapport plastifiant/amidon de blé étant fixé à 67 parts/100 parts (Composition AP6040).

Les conditions d'extrusion sont les suivantes :
- Profil de température (dix zones de chauffe Z1 à Z10) : 90/90/110/140/140/110/90/90/90/90
- Vitesse de vis : 200 tr/min.

En sortie d'extrudeuse, on constate que la matière ainsi obtenue est trop collante pour être granulée sur un matériel utilisé couramment avec des polymères synthétiques. On constate également que la composition est trop sensible à l'eau pour être refroidie dans un bac d'eau froide. Pour ces raisons, les joncs d'amidons plastifiés sont refroidis à l'air sur un tapis roulant pour être ensuite séchés à 80°C en étuve sous vide pendant 24 heures puis granulés.

On détermine le taux de reprise en eau de cet amidon plastifié selon le test suivant :

### Test de reprise en eau :

Le taux de reprise d'humidité est déterminé en mesurant la masse d'un échantillon après un mois de stockage, avant séchage (Mₕ) et après séchage sous vide à 80°C pendant 24 heures (Mₛ). Le taux de reprise d'humidité correspond à la différence (1-Mₛ/Mₕ) exprimée en pourcent.

On mesure également le taux d'insolubles de cet amidon plastifié après respectivement 1h, 3h et 24h d'immersion dans l'eau et ce, selon le test préalablement décrit au niveau de la description générale.

Les résultats obtenus pour l'amidon thermoplastique ainsi préparé sont les suivants :
- Taux de reprise d'humidité : 5,8 %
- Taux d'insolubles (après 1h/3h/24h d'immersion) : 86,3/74,1/63,7 %

A partir de cet amidon thermoplastique un alliage 1 a été préparé, contenant 50% au total, en poids, d'un mélange polymérique synthétique (composant 1) à base de polyoléfines constitué, pour moitié, de polypropylène du commerce et, pour autre moitié, de polypropylène greffé anhydride maléique.

Les conditions d'extrusion sont données ci-dessous.
- Mélange à sec des polypropylènes (50% en poids au total) et de l'amidon thermoplastique (50% en poids) en trémie principale
- Vitesse de vis, 400 tr/min
- Profil Température (en °C pour chacune des dix zones de chauffe Z1 à Z10)
   : 200/120/140/140/160/170/160/150/160/160

L'alliage 1 ainsi obtenu présente une coloration brune.

Il présente la coloration suivante, mesurée selon la « méthode CIELab » décrite ci-avant :
- un indice de clarté L* très significativement inférieur à 60,
- une composante b* très significativement supérieure à + 15, et
- une composante a* supérieure à 3,5.

Les résultats obtenus avec cet alliage 1 obtenu selon l'art antérieur, sont les suivants :
- Taux d'insolubles après 24h d'immersion : 94,5 %
- Taux d'humidité : 2,1 %
- Taux de gonflement après 24h d'immersion : 10 %
- Allongement à la rupture : 220 %
- Contrainte maximale à la rupture : 15 MPa.

A partir du même amidon thermoplastique tel qu'obtenu précédemment, un alliage 2 a été préparé, contenant :
- 49% au total, en poids, d'un mélange polymérique synthétique (composant 1) constitué, pour moitié, de polypropylène du commerce et, pour autre moitié, de polypropylène greffé anhydride maléique, et
- 2% au total d'un agent de liaison, en l'occurrence d'isophorone-diisocyanate (IPDI).

Les conditions d'extrusion sont données ci-dessous.
- Mélange à sec des polypropylènes (49 % en poids au total), de l'amidon thermoplastique (49 % en poids) et de L'IPDI (2%) en trémie principale
- Vitesse de vis, 400 tr/min
- Profil Température (en °C pour chacune des dix zones de chauffe Z1 à Z10)
   : 200/120/140/140/160/170/160/150/160/160.

L'alliage 2 ainsi obtenu présente une coloration jaune foncé.

Les résultats obtenus avec cet alliage 2 obtenu selon l'art antérieur, sont les suivants :
- Taux d'insolubles après 24h d'immersion : 98,2 %
- Taux d'humidité : 2,1 %
- Taux de gonflement après 24h d'immersion : 14 %
- Allongement à la rupture : 190 %
- Contrainte maximale à la rupture : 15 Mpa.

Cet exemple 1 pour lequel les alliages amidon / polyoléfines ont été préparés à partir d'un amidon préalablement plastifié ont montré que lesdits alliages présentaient une coloration qui n'était pas satisfaisante. Mesurée selon la « méthode CIELab » décrite ci-avant, cette coloration a notamment donné les résultats globaux ci-après :
- un indice de clarté L* inférieur, voire très significativement inférieur, à 60, y compris pour l'alliage 2 et
- une composante b* supérieure, voire très significativement supérieure, à + 15, y compris pour l'alliage 2.

### Exemple 2 : préparation de compositions selon l'invention

Dans le cadre de cet exemple, conforme à l'invention, on utilise le même équipement d'extrusion que celui décrit à l'exemple 1 et les mêmes conditions d'extrusion que celles mises en œuvre pour la préparation de l'alliage dans l'exemple 1 et notamment le profil de Température suivant(en °C pour chacune des dix zones de chauffe Z1 à Z10)
: 200/120/140/140/160/170/160/150/160/160.

Les produits mis en œuvre sont identiques en nature et proportions à ceux mis en œuvre pour l'obtention, respectivement, des alliages 1 et 2 décrits à l'exemple 1.

Cependant, dans le cas présent, il n'y a pas de préparation préalable d'un amidon thermoplastique mais l'introduction séparément, au sens de l'invention, du composant amylacé non plastifié (composant 2) et de son agent plastifiant (composant 3) ainsi que, éventuellement de l'agent de liaison au sein de l'extrudeuse contenant déjà le mélange polymérique (composant 1) dans un état fondu.

Selon une première variante (alliage 1' selon l'invention), il n'y a pas de mise en œuvre d'agent de liaison. Selon une seconde variante (alliage 2' selon l'invention), il y a mise en œuvre d'agent de liaison (2% d'IPDI), celui-ci étant incorporé en fin de ligne après élimination de l'eau.

Plus précisément, on introduit dans l'extrudeuse:
- le mélange polymérique dans la trémie principale de l'extrudeuse, en suite de quoi ledit mélange traverse l'ensemble des dix zones de chauffe Z1 à Z10 de l'extrudeuse,
- le plastifiant du composant amylacé (POLYSORB ®) au niveau de la zone Z2, et
- le composant amylacé (amidon de blé non plastifié) au niveau de la zone Z3
- l'agent de liaison éventuel au niveau de la zone Z7.

A noter que l'élimination de l'eau (légère dépression) est réalisée en zone Z6.

Les résultats obtenus avec l'alliage 1' préparé selon l'invention, sont les suivants :
- Coloration : jaune pâle
- Taux d'insolubles après 24h d'immersion : 97,4 %
- Taux de gonflement après 24h d'immersion : 9 %
- Allongement à la rupture : 950 %
- Contrainte maximale à la rupture : 18 MPa.

Par ailleurs, les résultats obtenus avec l'alliage 2' préparé selon l'invention, sont les suivants :
- Coloration : blanche translucide
- Taux d'insolubles après 24h d'immersion : 98,4 %
- Taux de gonflement après 24h d'immersion : 2,9 %
- Allongement à la rupture : 630 %
- Contrainte maximale à la rupture : 15 MPa.

Cet exemple 2 selon l'invention a montré que lesdits alliages présentaient une coloration qui était significativement améliorée par rapport à celle obtenue pour les alliages de l'exemple 1. Mesurée selon la « méthode CIELab » décrite ci-avant, cette coloration a notamment donné les résultats globaux ci-après :
- un indice de clarté L* supérieur, voire très significativement supérieur, à 60, voire à 70 comme pour l'alliage 2', et
- une composante b* inférieure, voire très significativement inférieure, à + 15, voire à + 10 comme pour l'alliage 2'.

En outre, la composante a* de ces alliages obtenus conformément à l'invention était toujours comprise entre - 0,5 et + 1,5, voire comprise entre - 0,5 et + 0,5 comme pour l'alliage 2'.

Ces résultats montrent que les compositions obtenues conformément à l'invention présentent globalement des caractéristiques de coloration mais aussi des caractéristiques mécaniques améliorées en regard de compositions préparées selon l'art antérieur pour lesquelles le composant amylacé est plastifié avant d'être mis en contact avec le polymère synthétique.

Ces caractéristiques améliorées permettent d'envisager des domaines applicatifs élargis pour les compositions selon l'invention, notamment du fait de leurs remarquables propriétés en termes d'allongement à la rupture, propriétés qui peuvent être mises à profit dans le cadre d'opérations industrielles d'étirage en vue de l'obtention de films ou de fibres, y compris textiles, ou autres articles qui soient à la fois minces et résistants.

### Exemple de référence 3 : préparation d'une composition selon un procédé de l'art antérieur à partir d'un amidon thermoplastique

A partir de l'amidon thermoplastique précédemment décrit dans l'exemple 1, un alliage 3 a été préparé, contenant 50% au total, en poids, d'un polymère synthétique (composant 1) constitué d'un polyamide du commerce, lequel présente les caractéristiques mécaniques suivantes :
- Allongement à la rupture : > 300 %
- Contrainte maximale à la rupture > 60 MPa.

Les conditions d'extrusion sont données ci-dessous.
- Mélange à sec du polyamide (50% en poids au total) et de l'amidon thermoplastique (50% en poids) en trémie principale
- Vitesse de vis, 400 tr/min
- Profil Température (en °C pour chacune des dix zones de chauffe Z1 à Z10)
   : 230/100/100/140/140/140/160/190/190/200

L'alliage 3 ainsi obtenu présente une coloration brune-marron.

Les caractéristiques mécaniques obtenues pour cet alliage 3 obtenu selon l'art antérieur, sont les suivantes :
- Allongement à la rupture : 60%
- Contrainte maximale à la rupture : 17 MPa.

### Exemple 4 : préparation d'une composition selon l'invention

Dans le cadre de cet exemple, conforme à l'invention, on utilise le même équipement d'extrusion que celui décrit à l'exemple 1 et les mêmes conditions d'extrusion que celles mises en œuvre pour la préparation de l'alliage 3 dans l'exemple 3 et notamment le profil de Température suivant(en °C pour chacune des dix zones de chauffe Z1 à Z10)
: 230/100/100/140/140/140/160/190/190/200.

Les produits mis en œuvre sont identiques en nature et proportions à ceux mis en œuvre pour l'obtention de l'alliage 3 de l'exemple 3.

Cependant, dans le cas présent, il n'y a pas de préparation préalable d'un amidon thermoplastique mais l'introduction séparément, au sens de l'invention, du composant amylacé non plastifié (composant 2) et de son agent plastifiant (composant 3) au sein de l'extrudeuse contenant déjà le polymère (composant 1) dans un état fondu.

Plus précisément, on introduit dans l'extrudeuse:
- le polymère dans la trémie principale de l'extrudeuse, en suite de quoi ledit mélange traverse l'ensemble des dix zones de chauffe Z1 à Z10 de l'extrudeuse,
- le plastifiant du composant amylacé (POLYSORB ®) au niveau de la zone Z2, et
- le composant amylacé (amidon de blé non plastifié) au niveau de la zone Z3.

A noter que l'élimination de l'eau (légère dépression) est réalisée en zone Z6.

Les résultats obtenus avec l'alliage 3' préparé selon l'invention, sont les suivants :
- Coloration : jaune pâle
- Indice de clarté L* supérieur à 65, composante b* comprise entre 0 et +10 et composante a* comprise entre - 0,5 et + 1,5
- Allongement à la rupture : 350 %
- Contrainte maximale à la rupture : 28 MPa.

Ces résultats montrent qu'une composition obtenue conformément à l'invention et contenant un polyamide comme polymère synthétique présente des caractéristiques de coloration mais aussi des caractéristiques mécaniques très significativement améliorées en regard d'une composition préparées selon l'art antérieur pour laquelle le composant amylacé est plastifié avant d'être mis en contact avec le polyamide.

### Exemple de référence 5 : préparation d'une composition selon un procédé de l'art antérieur à partir d'un amidon thermoplastique

A partir de l'amidon thermoplastique précédemment décrit dans l'exemple 1, un alliage 4 a été préparé, contenant 50% au total, en poids, d'un polymère synthétique (composant 1) constitué de polyuréthane thermoplastique (TPU) commercialisé sous la marque « Estane 58277 ».

Les conditions d'extrusion sont données ci-dessous.
- Mélange à sec du TPU (50% en poids au total) et de l'amidon thermoplastique (50% en poids) en trémie principale
- Vitesse de vis, 300 tr/min
- Profil Température (en °C pour chacune des dix zones de chauffe Z1 à Z10)
   : 180/180/160/140/140/130/130/160/160/160

L'alliage 4 ainsi obtenu présente une coloration marron.

Les caractéristiques mécaniques de cet alliage, obtenu selon l'art antérieur, sont les suivantes :
- Allongement à la rupture : 500%
- Contrainte maximale à la rupture : 20 MPa.

### Exemple 6 : préparation de compositions selon l'invention

Dans le cadre de cet exemple, conforme à l'invention, on utilise le même équipement d'extrusion que celui décrit à l'exemple 1 et les mêmes conditions d'extrusion que celles mises en œuvre pour la préparation de l'alliage 4 dans l'exemple 5 et notamment le profil de Température suivant(en °C pour chacune des dix zones de chauffe Z1 à Z10)
: 180/180/160/140/140/130/130/160/160/160.

Les produits mis en œuvre sont identiques en nature et proportions à ceux mis en œuvre pour l'obtention de l'alliage 4 de l'exemple 5.

Cependant, dans le cas présent, il n'y a pas de préparation préalable d'un amidon thermoplastique mais l'introduction séparément, au sens de l'invention, du composant amylacé non plastifié (composant 2) et de son agent plastifiant (composant 3) au sein de l'extrudeuse contenant déjà le polymère (composant 1) dans un état fondu.

Plus précisément, on introduit dans l'extrudeuse:
- le polymère dans la trémie principale de l'extrudeuse, en suite de quoi ledit mélange traverse l'ensemble des dix zones de chauffe Z1 à Z10 de l'extrudeuse,
- le plastifiant du composant amylacé (POLYSORB ®) au niveau de la zone Z2, et
- le composant amylacé (amidon de blé non plastifié) au niveau de la zone Z3.

A noter que l'élimination de l'eau (légère dépression) est réalisée en zone Z6.

Les résultats obtenus avec l'alliage 4' préparé selon l'invention, sont les suivants :
- Coloration : jaune pâle
- Indice de clarté L* supérieur à 65, composante b* comprise entre 0 et +10 et composante a* comprise entre - 0,5 et + 1,5
- Allongement à la rupture : 500 %
- Contrainte maximale à la rupture : 20 MPa.

Ces résultats montrent qu'une composition obtenue conformément à l'invention et contenant un polyuréthane thermoplastique (TPU) comme polymère synthétique présente des caractéristiques de coloration très significativement améliorées en regard d'une composition préparées selon l'art antérieur pour laquelle le composant amylacé est plastifié avant d'être mis en contact avec le TPU.

Ceci, sans nuire aux caractéristiques mécaniques de ladite composition.

De manière remarquable, la Société Demanderesse a observé par ailleurs que lorsque cette composition selon l'invention était, dans les mêmes conditions d'extrusion que celles décrites ci-dessus, modifiée de façon à contenir, respectivement, en poids : a) 67 % de composant 1 ; b) 19,8 % de composant 2 et c) 13,2 % du composant 3, les caractéristiques de coloration mais aussi les caractéristiques mécaniques de l'alliage obtenu (alliage 4") pouvaient être encore très significativement améliorées, à savoir :
- Coloration : transparente
- Indice de clarté L* supérieur à 70, composante b* comprise entre 0 et + 6 et composante a* comprise entre - 0,5 et + 0,5
- Allongement à la rupture : 750 %
- Contrainte maximale à la rupture : 35 MPa.

On se rapproche ainsi, pour cet alliage 4", des caractéristiques tant de coloration que mécaniques du polymère synthétique (TPU) en tant que tel.

### Exemple 7 : préparation de compositions selon l'invention

Dans le cadre de cet exemple, conforme à l'invention, on utilise le même équipement d'extrusion que celui décrit à l'exemple 1

Le profil de Température employé est le suivant(en °C pour chacune des dix zones de chauffe Z1 à Z10)
: 180/100/100/140/180/180/180/180/180/180.

Les produits mis en œuvre sont identiques en nature et proportions à ceux mis en œuvre pour l'obtention de l'alliage 3 de l'exemple 3. Ceci, à l'exception de la nature du polymère qui, en l'occurrence, est un PETG et plus particulièrement un poly (éthylène téréphtalate - co- 1,4 - cyclohexane diméthylène téréphtalate).

Cependant, dans le cas présent, il n'y a pas de préparation préalable d'un amidon thermoplastique mais l'introduction séparément, au sens de l'invention, du composant amylacé non plastifié (composant 2) et de son agent plastifiant (composant 3) au sein de l'extrudeuse contenant le PETG (composant 1), dans un état fondu.

Plus précisément, on introduit dans l'extrudeuse:
- le polymère dans la trémie principale de l'extrudeuse, en suite de quoi ledit mélange traverse l'ensemble des dix zones de chauffe Z1 à Z10 de l'extrudeuse,
- le plastifiant du composant amylacé (POLYSORB ®) au niveau de la zone Z2, et
- le composant amylacé (amidon de blé non plastifié) au niveau de la zone Z3.

A noter que l'élimination de l'eau (légère dépression) est réalisée en zone Z6.

Les résultats obtenus avec l'alliage 5' préparé selon l'invention, sont les suivants :
- Coloration : jaune pâle
- Indice de clarté L* supérieur à 65, composante b* comprise entre 0 et +10 et composante a* comprise entre - 0,5 et + 1,5
- Allongement à la rupture : 100 %
- Contrainte maximale à la rupture : 20 MPa.

De manière remarquable, la Société Demanderesse a observé par ailleurs que lorsque cette composition selon l'invention était, dans les mêmes conditions d'extrusion que celles décrites ci-dessus, modifiée de façon à contenir, respectivement, en poids : a) 67 % de composant 1 ; b) 19,8 % de composant 2 et c) 13,2 % du composant 3, les caractéristiques mécaniques de l'alliage obtenu (alliage 5") pouvaient être encore très significativement améliorées, à savoir :
- Allongement à la rupture : 380%
- Contrainte maximale à la rupture : 30 MPa.

Ceci, sans nuire aux caractéristiques de coloration de ladite composition qui reste jaune pâle.

### Exemple 8 : préparation d'une composition selon l'invention

Dans le cadre de cet exemple, conforme à l'invention, on utilise le même équipement d'extrusion que celui décrit à l'exemple 1

Le profil de Température employé est le suivant(en °C pour chacune des dix zones de chauffe Z1 à Z10)
: 230/100/100/150/210/210/210/180/190/190.

Les produits mis en œuvre sont identiques en nature et proportions à ceux mis en œuvre pour l'obtention de l'alliage 3 de l'exemple 3. Ceci, à l'exception de la nature du polymère qui, en l'occurrence, est un copolymère poly (styrène-*b*-(éthylène-*co*-butadiène)-*b-*styrène) ou SEBS, greffé à 1% par de l'anhydride maléique.

Cependant, dans le cas présent, il n'y a pas de préparation préalable d'un amidon thermoplastique mais l'introduction séparément, au sens de l'invention, du composant amylacé non plastifié (composant 2) et de son agent plastifiant (composant 3) au sein de l'extrudeuse contenant le SEBS greffé (composant 1) dans un état fondu.

Plus précisément, on introduit dans l'extrudeuse:
- le polymère dans la trémie principale de l'extrudeuse, en suite de quoi ledit mélange traverse l'ensemble des dix zones de chauffe Z1 à Z10 de l'extrudeuse,
- le plastifiant du composant amylacé (POLYSORB ®) au niveau de la zone Z2, et
- le composant amylacé (amidon de blé non plastifié) au niveau de la zone Z3.

A noter que l'élimination de l'eau (légère dépression) est réalisée en zone Z6.

Les résultats obtenus avec l'alliage 6' préparé selon l'invention, sont les suivants :
- Coloration : jaune pâle
- Indice de clarté L* supérieur à 65, composante b* comprise entre 0 et +10 et composante a* comprise entre - 0,5 et + 1,5
- Allongement à la rupture : > 1300 %
- Contrainte maximale à la rupture : 22 MPa.

## Revendications

1. Procédé de préparation d'une composition à base de polymère synthétique et de composant amylacé, comprenant :
• l'introduction, dans un réacteur contenant un polymère synthétique (composant 1) fondu soumis à des forces de cisaillement et chauffé à une température comprise entre 60°C et 260°C, d'un composant amylacé non plastifié (composant 2) et d'un agent plastifiant de celui-ci (composant 3), et
• le malaxage du mélange obtenu, à une température comprise entre 60 °C et 260 °C, avec une force de cisaillement et pendant une durée suffisantes, pour obtenir la plastification du composant amylacé (composant 2) par l'agent plastifiant (composant 3) et un mélange homogène du polymère synthétique et du composant amylacé plastifié,
**caractérisé en ce que**
le polymère synthétique est choisi dans le groupe comprenant les polyéthylènes (PE) et polypropylènes (PP), fonctionnalisés et non fonctionnalisés, les polyamides (PA), les polyuréthanes thermoplastiques (TPU), les copolymères styrène-éthylène-butylène-styrène (SEBS), les poly(téréphtalate d'éthylène) amorphes (PETG) et les mélanges de ceux-ci ;
l'agent plastifiant est choisi parmi le glycérol, les polyglycérols, l'isosorbide, les sorbitans, le sorbitol, le mannitol, les sirops de glucose hydrogénés, et les mélanges de ces produits ;
le composant amylacé est un amidon natif de céréales, de tubercules, ou de légumineuses, et de mélanges de tels amidons ;
le composant amylacé est incorporé dans le polymère synthétique à raison de 20 à 400 % en poids sec , rapporté au poids sec du polymère synthétique présent dans la composition ;
l'agent plastifiant est mis en oeuvre à raison de 10 à 150 parts en poids pour 100 parts en poids de composant amylacé ;
l'agent plastifiant est introduit dans le réacteur et incorporé dans le polymère synthétique fondu avant l'introduction du composant amylacé non plastifié.

2. Procédé selon la revendication 1, **caractérisé en ce que** les températures auxquelles, respectivement:
- se trouve le polymère synthétique fondu lorsqu'il est mis en contact du composant amylacé non plastifié, et
- se fait ensuite la plastification du composant amylacé par son plastifiant,
sont comprises entre 80 °C et 240 °C.

3. Procédé selon la revendication 2, **caractérisé en ce que** :
- lesdites températures sont comprises entre 120 °C et 200 °C et
- le polymère synthétique est choisi parmi les polyoléfines.

4. Procédé selon l'une quelconque des revendications 1 à 3, **caractérisé en ce qu'**il comprend en outre une étape d'incorporation d'au moins un agent de liaison (composant 4) choisi parmi les composés porteurs d'au moins deux fonctions, libres ou masquées, identiques ou différentes, choisies parmi les fonctions isocyanate, carbamoylcaprolactame, époxyde, halogéno, acide protonique, anhydride d'acide, halogénure d'acyle, oxychlorure, trimétaphosphate et alcoxysilane, cette étape d'incorporation d'un agent de liaison étant postérieure à l'incorporation du composant amylacé non plastifié (composant 2) et de l'agent plastifiant (composant 3) dans le polymère thermoplastique.

5. Procédé selon la revendication 4, **caractérisé en ce que** l'agent de liaison est un diisocyanate.

6. Procédé selon l'une des revendications 4 ou 5, **caractérisé en ce que** la quantité d'agent de liaison est comprise entre 0,01 et 15 % rapportée au poids total du mélange contenant le polymère synthétique, le composant amylacé et l'agent plastifiant.

7. Composition polymérique susceptible d'être obtenue selon l'une quelconque des revendications 1 à 6, **caractérisée en ce qu'**elle comprend :
- de 15 à 85 % en poids d'au moins un composant amylacé (composant 2),
- de 4 à 35 % en poids d'au moins un plastifiant dudit composant amylacé (composant 3), et
- de 5 à 80 % en poids d'au moins un polymère synthétique (composant 1), ces pourcentages étant exprimés en poids sec et rapportés au poids sec total de ladite composition.

## Patentansprüche

1. Verfahren zur Herstellung einer Zusammensetzung auf Basis eines synthetischen Polymers und einer Stärkekomponente, umfassend:
• Einführen einer nicht plastifizierten Stärkekomponente (Komponente 2) und eines Weichmachers davon (Komponente 3) in einen Reaktor, enthaltend ein synthetisches geschmolzenes Polymer (Komponente 1), das Scherkräften ausgesetzt ist und auf eine Temperatur zwischen 60 °C und 260 °C erhitzt ist, und
• Rühren der erhaltenen Mischung bei einer Temperatur zwischen 60 °C und 260 °C mit einer Scherkraft und während eines ausreichenden Zeitraums, um die Plastifizierung der Stärkekomponente (Komponente 2) durch den Weichmacher (Komponente 3) und eine homogene Mischung des synthetischen Polymers und der plastifizierten Stärkekomponente zu erhalten,
**dadurch gekennzeichnet, dass**
das synthetische Polymer ausgewählt ist aus der Gruppe, umfassend die Polyethylene (PE) und Polypropylene (PP), funktionalisiert und nicht funktionalisiert, die Polyamide (PA), die thermoplastischen Polyurethane (TPU), die Styrol-Ethylen-Butylen-Styrol Copolymere (SEBS), die amorphen Poly(ethylenterephthalate) (PETG) und die Mischungen davon;
der Weichmacher ausgewählt ist aus Glycerin, den Polyglycerinen, Isosorbid, den Sorbitanen, Sorbitol, Mannitol, den hydrierten Glucosesirupen und den Mischungen dieser Produkte;
die Stärkekomponente eine native Getreidestärke von Knollen oder Hülsenfrüchtlern und Mischungen dieser Stärken ist;
die Stärkekomponente im synthetischen Polymer in einem Anteil von 20 bis 400 Trockengewichts-% in Bezug auf das Trockengewicht des in der Zusammensetzung vorhandenen synthetischen Polymers inkorporiert ist;
der Weichmacher in einem Anteil von 10 bis 150 Gewichtsteilen pro 100 Gewichtsteile Stärkekomponente eingeführt ist;
der Weichmacher vor dem Einführen der nicht plastifizierten Stärkekomponente in den Reaktor eingeführt und in das geschmolzene synthetische Polymer inkorporiert wird.

2. Verfahren nach Anspruch 1, **dadurch gekennzeichnet, dass** die Temperaturen, bei denen:
- sich das synthetische geschmolzene Polymer befindet, wenn es mit der nicht plastifizierten Stärkekomponente in Kontakt gebracht wird, beziehungsweise
- die Plastifizierung der Stärkekomponente durch ihren Weichmacher anschließend erfolgt,
zwischen 80 °C und 240 °C liegt.

3. Verfahren nach Anspruch 2, **dadurch gekennzeichnet, dass**:
- die Temperaturen zwischen 120 °C und 200 °C liegen und
- das synthetische Polymer ausgewählt ist aus den Polyolefinen.

4. Verfahren nach einem der Ansprüche 1 bis 3, **dadurch gekennzeichnet, dass** es ferner einen Schritt eines Einführens von mindestens einem Bindemittel (Komponente 4) umfasst, ausgewählt aus den Verbindungen, die mindestens zwei Funktionen tragen, frei oder maskiert, gleich oder verschieden, ausgewählt aus den Isocyanat-, Carbamoylcaprolactam-, Epoxid-, Halogen-, Protonensäure-, Säureanhydrid-, Acylhalogenid-, Oxychlorid-, Trimetaphosphat- und Alkoxysilanfunktionen, wobei dieser Schritt eines Einführens eines Bindemittels anschließend an das Einführen der nicht plastifizierten Stärkekomponente (Komponente 2) und des Weichmachers (Komponente 3) in das thermoplastische Polymer erfolgt.

5. Verfahren nach Anspruch 4, **dadurch gekennzeichnet, dass** das Bindemittel ein Diisocyanat ist.

6. Verfahren nach einem der Ansprüche 4 oder 5, **dadurch gekennzeichnet, dass** die Menge des Bindungsmittels zwischen 0,01 und 15 % bezogen auf das Gesamtgewicht der Mischung, enthaltend das synthetische Polymer, die Stärkekomponente und den Weichmacher, beträgt.

7. Polymerzusammensetzung, die geeignet ist nach einem der Ansprüche 1 bis 6 erhalten zu werden, **dadurch gekennzeichnet, dass** sie umfasst:
- von 15 bis 85 Gewichts-% mindestens einer Stärkekomponente (Komponente 2)
- von 4 bis 35 Gewicht-% mindestens eines Weichmachers der Stärkekomponente (Komponente 3) und
- von 5 bis 80 Gewichts-% mindestens eines synthetischen Polymers (Komponente 1),
wobei diese Prozentsätze als Trockengewicht und bezogen auf das Gesamttrockengewicht der Zusammensetzung ausgedrückt sind.

## Claims

1. A process for preparing a composition based on a synthetic polymer and on a starchy component, comprising:
• the introduction, into a reactor containing a molten synthetic polymer (component 1) subjected to shear forces and heated to a temperature between 60°C and 260°C, of a nonplasticized starchy component (component 2) and of a plasticizer therefor (component 3), and
• blending of the mixture obtained at a temperature of between 60°C and 260°C, with a shear force and for a time that are sufficient to obtain plasticization of the starchy component (component 2) with the plasticizer (component 3) and homogeneous mixing of the synthetic polymer and of the plasticized starchy component
wherein:
the synthetic polymer is chosen from the group comprising polyethylenes (PE) and polypropylenes (PP), which are optionally functionalized, polyamides (PA), thermoplastic polyurethanes (TPU), styrene-ethylene-butylene-styrene (SEBS) copolymers, amorphous poly(ethylene terephthalates) (PETG) and mixtures thereof;
the plasticizer is chosen from glycerol, polyglycerols, isosorbide, sorbitans, sorbitol, mannitol, and hydrogenated glucose syrups, and any mixture of these products;
the starchy material is a native starch of cereals, tubers, or legumes, and mixtures of such starches;
the starchy component is incorporated into the synthetic polymer in a proportion of from 20% to 400% by dry weight relative to the dry weight of the synthetic polymer present in the composition;
the plasticizer is used in a proportion of from 10 to 150 parts by weight per 100 parts by weight of starchy component;
the plasticizer is introduced into the reactor and incorporated into the synthetic polymer before the introduction of the nonplasticized starchy component.

2. The process as claimed in claim 1, wherein the temperatures, respectively:
- of the softened or molten synthetic polymer when it is placed in contact with the nonplasticized starchy component, and
- at which the plasticization of the starchy component by its plasticizer is then performed,
are between 80°C and 240°C.

3. The process as claimed in claim 2, wherein:
- said temperatures are between 120°C and 200°C, and
- the synthetic polymer is chosen from polyolefins

4. The process as claimed in any one of claims 1 to 3, **characterized in that** it also comprises a step of incorporating at least one linker (component 4) chosen from compounds bearing at least two identical or different free or masked functions, chosen from isocyanate, carbamoylcaprolactam, epoxide, halo, protonic acid, acid anhydride, acyl halide, oxychloride, trimetaphosphate and alkoxysilane functions, this step of incorporation of a linker being subsequent to the incorporation of the nonplasticized starchy component (component 2) and of the plasticizer (component 3) into the thermoplastic polymer.

5. The process as claimed in claim 4, wherein the linker is a diisocyanate.

6. The process as claimed in either of claims 4 and 5, wherein the amount of linker is between 0.01% and 15% relative to the total weight of the mixture containing the synthetic polymer, the starchy component and the plasticizer.

7. A polymeric composition, especially a thermoplastic composition, obtained as claimed in any one of claims 1 to 6, **characterized in that** it comprises:
- from 15% to 85% by weight of at least one starchy component (component 2),
- from 4% to 35% by weight of at least one plasticizer for said starchy component (component 3), and
- from 5% to 80% by weight of at least one synthetic polymer (component 1),
these percentages being expressed as dry weight and relative to the total dry weight of said composition.
